# EUROPÄISCHE PATENTANMELDUNG

(11) **EP 2 881 889 A1**
(43) Veröffentlichungstag der Anmeldung: **10.06.2015**
(21) Anmeldenummer: 13195787.0
(22) Anmeldetag: 05.12.2013
(51) Int. Cl.: G06K 7/08, G06K 13/08

(54) **Manipulationssicherer Kartenleser**

(71) Anmelder: ddm hopt + schuler GmbH & Co. KG., 78628 Rottweil (DE)
(72) Erfinder: Hopt, Karl-Rudolf, 78628 Rottweil (DE)
(74) Vertreter: Kohler Schmid Möbus Patentanwälte

(57) **Zusammenfassung**

Ein Kartenleser (1) mit einem Magnetkopf (7) zum Datenaustausch mit dem Magnetstreifen (3) einer in das Kartenlesergehäuse (5) eingeführten Magnetstreifenkarte (2) umfasst erfindungsgemäß einen Antrieb (8) zum Verfahren des Magnetkopfes (7) entlang des Magnetstreifens (3) der in einer ortsfesten Datenaustauschposition befindlichen Magnetstreifenkarte (2), eine am Magnetkopf (7) angeordnete Datenverschlüsselungseinheit (18) zum Verschlüsseln der beim Verfahren des Magnetkopfes (7) vom Magnetkopf (7) gelesenen Daten des Magnetstreifens (3), einen mit der Datenverschlüsselungseinheit (18) elektrisch verbundenen und mit dem Magnetkopf (7) mitbewegten Sender (19) zum Senden der verschlüsselten Daten, sowie einen ortfesten Empfänger (23) zum Empfangen der gesendeten verschlüsselten Daten.

## Beschreibung

Die vorliegende Erfindung betrifft einen Kartenleser mit einem Magnetkopf zum Datenaustausch mit dem Magnetstreifen einer in das Kartenlesergehäuse eingeführten Magnetstreifenkarte.

Derartige Magnetkartenleser sind allgemein bekannt. Allerdings können zu Manipulationszwecken die Anschlusskontakte des Magnetkopfes oder Datenleitungen, auf denen die vom Magnetkopf ausgelesenen Daten des Magnetstreifens übertragen werden, kontaktiert werden, um diese Daten abzugreifen.

Es ist demgegenüber die Aufgabe der vorliegenden Erfindung, einen Kartenleser der eingangs genannten Art gegen solche Manipulationen wirkungsvoll zu schützen.

Diese Aufgabe wird bei einem Kartenleser mit einem Magnetkopf zum Datenaustausch mit einer Magnetstreifenkarte erfindungsgemäß gelöst durch:
- einen Antrieb zum Verfahren des Magnetkopfes entlang des Magnetstreifens der in einer ortsfesten Datenaustauschposition befindlichen Magnetstreifenkarte,
- eine am Magnetkopf angeordnete Datenverschlüsselungseinheit zum Verschlüsseln der beim Verfahren des Magnetkopfes von dem Magnetkopf gelesenen Daten des Magnetstreifens,
- einen mit der Datenverschlüsselungseinheit elektrisch verbundenen und mit dem Magnetkopf mitbewegten Sender zum Senden der verschlüsselten Daten, sowie
- einen ortfesten Empfänger zum Empfangen der gesendeten verschlüsselten Daten.

Erfindungsgemäß werden die vom verfahrbaren Magnetkopf ausgelesenen Daten durch die Datenverschlüsselungseinheit verschlüsselt und dann von dem Sender drahtlos an den ortsfesten Empfänger gesendet. Ein Abgreifen von unverschlüsselten Daten auf dem Übertragungsweg von der Datenverschlüsselungseinheit bis zu einer Datenentschlüsselungseinheit ist somit ausgeschlossen. Außerdem erschwert das Verfahren des Magnetkopfes das Anbringen von Manipulationsdrähten am Magnetkopf.

Sind der Magnetkopf und der Sender nicht auf der gleichen Leiterplatte montiert, so sind die Datenverschlüsselungseinheit und der Sender vorteilhaft über eine biegsame Leiterplatte (sog. "Flexleitung") miteinander elektrisch verbunden.

Vorzugsweise sind die Anschlusskontakte des Magnetkopfes und die Datenverschlüsselungseinheit durch eine insbesondere biegsame Bohrschutz-Leiterplatte abgedeckt, wobei besonders bevorzugt die Anschlusskontakte, die Datenverschlüsselungseinheit und die Bohrschutz-Leiterplatte miteinander mittels einer Vergussmasse vergossen sind. Wenn zu Manipulationszwecken die Vergussmasse entfernt wird, um an der Datenverschlüsselungseinheit oder an den Anschlusskontakten Daten abzugreifen, wird dabei auch die Bohrschutz-Leiterbahnstruktur der Bohrschutz-Leiterplatte zerstört und dadurch ein die Bohrschutz-Leiterbahnstruktur einschließender Stromkreis unterbrochen. Dies wird von einer Überwachungseinheit des Kartenlesers erkannt, die dann keinen Lesevorgang mehr zulässt bzw. den Magnetkopf außer Funktion setzt. Eine unbemerkte Manipulation am Kartenleser ist somit nicht möglich.

In einer besonders bevorzugten Ausführungsform des erfindungsgemäßen Kartenlesers ist die Datenverschlüsselungseinheit ein SMD-Bauteil, das direkt auf eine der beiden Flachseiten einer biegsamen Bohrschutz-Leiterplatte aufgelötet ist, welche einenends mit den Anschlusskontakten des Magnetkopfes und andernends mit dem Sender elektrisch verbunden ist, wobei die Anschlusskontakte mit der Bohrschutz-Leiterplatte abgedeckt sind, wobei die Datenverschlüsselungseinheit auf der den Anschlusskontakten zugewandten Flachseite der Bohrschutz-Leiterplatte angeordnet ist, und wobei die Anschlusskontakte, die Datenverschlüsselungseinheit und die Bohrschutz-Leiterplatte miteinander mittels der Vergussmasse vergossen sind.

In einer anderen besonders bevorzugten Ausführungsform des erfindungsgemäßen Kartenlesers ist die Datenverschlüsselungseinheit ein Durchsteckmontage-Lötbauteil, das mit den Anschlusskontakten des Magnetkopfes verlötet ist, und einen herausgeführten, insbesondere biegsamen Bohrschutz-Leiterplattenabschnitt aufweist, mit dem die Anschlusskontakte abgedeckt sind, wobei die Anschlusskontakte, die Datenverschlüsselungseinheit und der Bohrschutz-Leiterplattenabschnitt miteinander mittels der Vergussmasse vergossen sind.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: einen Längsschnitt (Fig. 1a) und eine teilweise aufgeschnittene Draufsicht (Fig. 1b) des erfindungsgemäßen Kartenlesers;
- Fig. 2: ein Detail des erfindungsgemäßen Kartenlesers entsprechend II in Fig. 1a;
- Fign. 3a, 3b: einen Längsschnitt (Fig. 3a) und einen perspektivischen Längsschnitt (Fig. 3b) durch die beiden elektronischen Baugruppen des Kartenlesers;
- Fign. 4a-4c: einen Längsschnitt (Fig. 4a), einen perspektivischen Längsschnitt (Fig. 4b) und eine Draufsicht (Fig. 4c) eines in Fig. 3 gezeigten Magnetkopfes; und
- Fig. 5: einen Längsschnitt (Fig. 5a), einen perspektivischen Längsschnitt (Fig. 5b) und eine Draufsicht (Fig. 5c) eines modifizierten Magnetkopfes des erfindungsgemäßen Kartenlesers.

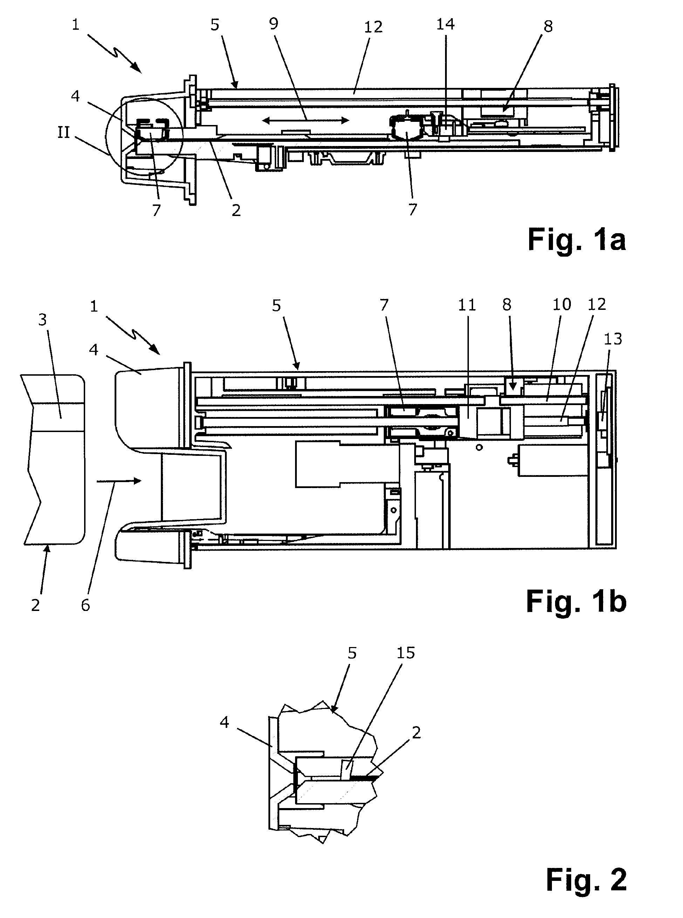

Der in **Fign. 1a, 1b** gezeigte Kartenleser **1** dient zum Lesen einer Magnetstreifenkarte **2,** die auf einer ihrer beiden Kartenseiten einen Magnetstreifen **3** trägt, auf welchem Daten gespeichert sind.

Über ein Mundstück **4** des Kartenlesergehäuses **5** wird die Karte 2 durch den Benutzer in Einführrichtung **6** in das Kartenlesergehäuse 5 teilweise eingeführt, wobei der Magnetstreifen 3 parallel zur Einführrichtung 6 ausgerichtet ist. Danach wird die Karte 2 mithilfe eines motorischen Einzugs (nicht gezeigt) weiter in Einführrichtung 6 bis in ihre in Fig. 1a gezeigte Datenaustauschposition eingezogen. Zum Lesen der auf dem Magnetstreifen 3 gespeicherten Daten weist der Kartenleser 1 einen Magnetkopf **7** auf, der, wenn sich die Karte 2 in ihrer Datenaustauschposition befindet, mittels eines Transportantriebs **8** entlang des Magnetstreifens 3 verfahren wird (Doppelpfeil **9**). In Fig. 1 a ist der Magnetkopf 7 sowohl in seiner hinteren, rechten Endstellungen als auch in seiner vorderen, linken Endstellung gezeigt.

Der Transportantrieb 8 umfasst eine sich in Verfahrrichtung 9 erstreckende Führungsstange **10,** einen darauf verschiebbar geführten Schieber **11,** der den Magnetkopf 7 trägt, sowie eine zur Führungsstange 10 parallele Antriebsspindel **12,** die von einem Motor **13** drehbar angetrieben wird. Die Antriebsspindel 12 geht durch ein Spindelgewinde des Schiebers 11, so dass eine Drehung der Antriebsspindel 12 zu einer Verfahrbewegung des Schiebers 11 führt, der durch die Führungsstange 10 und die Antriebsspindel 12 unverdrehbar gehalten ist. Der Magnetkopf 7 ist über einen Magnetkopfhalter **14** am Schieber 11 befestigt.

Wie in **Fig. 2** gezeigt, weist der Kartenleser 1 innerhalb des Mundstücks 4 einen schwenkbaren Riegel **15** auf, der, wenn sich die Karte 2 in ihrer Datenaustauschposition befindet, hinter der Karte 2 in die Kartenbewegungsbahn schwenkt, um den Kartenschacht zu verschließen und so die Karte 2 gegen Herausziehen entgegen der Einführrichtung 6 zu sichern.

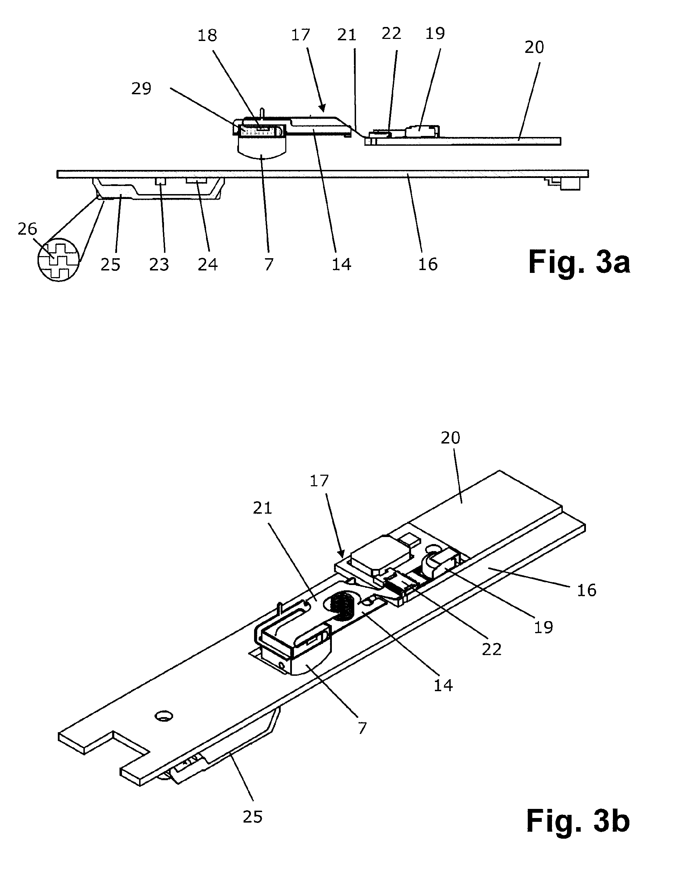

In **Fign. 3a, 3b** sind die beiden elektronischen Baugruppen des Kartenlesers 1 gezeigt, nämlich eine im Kartenlesergehäuse 5 ortsfest montierte Hauptleiterplatte (Hauptplatine) **16** und eine am Schieber 11 befestigte Magnetkopf-Baugruppe **17.** Die mit dem Schieber 11 mitbewegte Magnetkopf-Baugruppe 17 umfasst neben dem Magnetkopf 7 eine am Magnetkopf 7 angeordnete und mit dem Magnetkopf 7 elektrisch verbundene Datenverschlüsselungseinheit **18** zum Verschlüsseln der beim Verfahren des Magnetkopfes 7 vom Magnetkopf 7 gelesenen Daten des Magnetstreifens 3 und einen (Funk)Sender **19** zum Senden der verschlüsselten Daten. Der Sender 19 ist auf einer eigenen Leiterplatte **20** montiert und mit der Datenverschlüsselungseinheit 17 über eine biegsame Leiterplatte (sog. "Flexleitung") **21** elektrisch verbunden, die in einen Flexleitungsstecker **22** der Leiterplatte 20 eingesteckt ist. Auf der dem Magnetkopf 7 abgewandten Unterseite der Hauptleiterplatte 16 befinden sich ein Empfänger 23 zum Empfangen der vom Sender 18 gesendeten verschlüsselten Daten und eine mit dem Empfänger 23 elektrisch verbundene Datenentschlüsselungseinheit **24** zum Entschlüsseln der empfangenen verschlüsselten Daten. Der Empfänger 23 und die Datenentschlüsselungseinheit 24 sind von einer Bohrschutzhaube **25** abgedeckt, die innenseitig flächendeckend eine z.B. mäanderförmige Bohrschutz-Leiterbahnstruktur **26** aufweist, welche elektrisch leitend an die Hauptleiterplatte 16 angeschlossen ist. Bei der Funkverbindung kann es sich beispielsweise um eine Bluetooth-Verbindung oder um jede andere drahtlose Verbindung handeln.

Sofern die Entschlüsselung der Daten nicht im Kartenleser 1 selbst erfolgt, entfallen auf der Hauptplatine 16 die Datenentschlüsselungseinheit 24 und die Bohrschutzhaube 25, da auf der Hauptplatine 16 nur verschlüsselte Daten vorliegen.

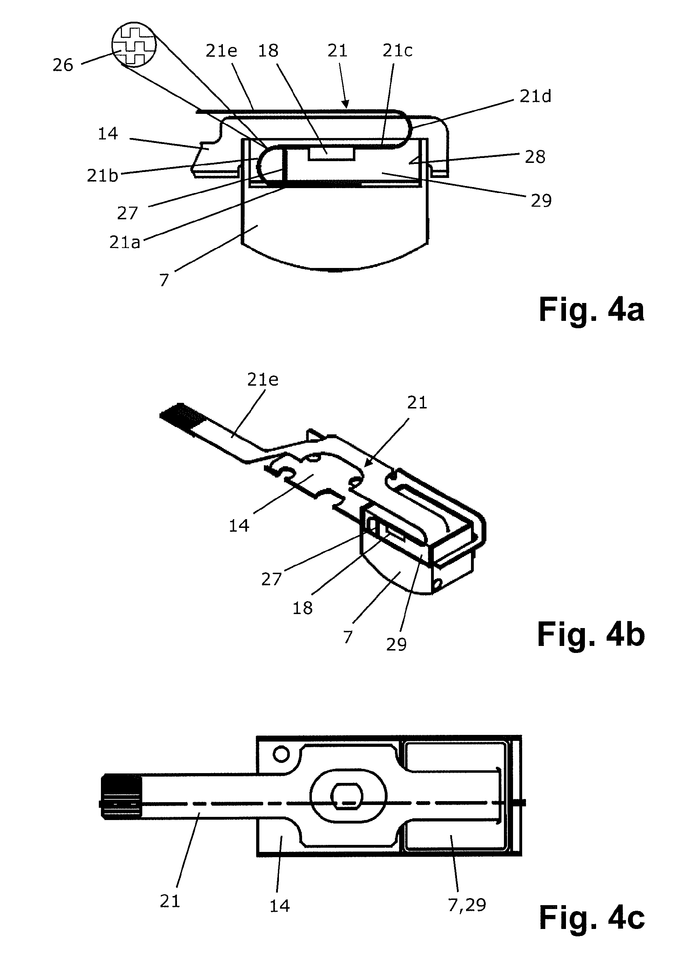

Wie in **Fign. 4a bis 4c** gezeigt ist, ist die Datenverschlüsselungseinheit 18 ein SMD-Bauteil, das direkt auf eine der beiden Flachseiten der Flexleitung 21 aufgelötet ist.

Die Flexleitung 21 weist eine mindestens eine zweilagige Leiterbahnstruktur auf, wobei die eine Leiterbahnstruktur zur Kontaktierung der Datenverschlüsselungseinheit 18 und als Datenleitung dient und die andere Leiterbahnstruktur flächendeckend mit einer Bohrschutz-Leiterbahnstruktur 26 ausgebildet ist. Der eine Endabschnitt **21a** der Flexleitung 21 ist mit den rückseitigen Anschlusskontakten ("Anschlusspins") **27** des Magnetkopfes 7 elektrisch verbunden bzw. angelötet und bei **21b** umgebogen, um mit einem Mittelabschnitt **21c** die Anschlusspins 27 abzudecken. Die Flexleitung 21 kann bei **21d** erneut umgebogen sein, um das andere Leitungsende **21e** auszubilden, das in den Flexleitungsstecker 22 der Leiterplatte 20 eingesteckt wird. Die Datenverschlüsselungseinheit 18 ist auf der den Anschlusspins 27 zugewandten Flachseite des Mittelabschnitts 21 c aufgelötet und somit - genauso wie auch die Anschlusspins 27 - durch die weiter außen liegende Bohrschutz-Leiterbahnstruktur 26 des Mittelabschnitts 21 c geschützt. Die Abschnitte 21 a, 21 b, 21 c der Flexleitung 21 sind in einer rückseitig offenen Aussparung **28** des Magnetkopfes 7 angeordnet, innerhalb der sich die Anschlusspins 27 erstrecken. Die Aussparung 28 ist mit einer Vergussmasse **29,** z.B. mit einem Epoxidharz, gefüllt, so dass die Anschlusspins 27, die Datenverschlüsselungseinheit 18 und die Flexleitung 21 miteinander mittels der Vergussmasse 29 vergossen sind. Die Datenverschlüsselungseinheit 18 ist also an der die Anschlusspins 27 aufweisenden Anschlussseite des Magnetkopfes 7 befestigt und weist eine herausgeführte Flexleitung 21 auf, die anderenends an den Sender 19 angeschlossen ist. Die freiliegenden Abschnitte 21d, 21e der Flexleitung 21 brauchen keine Bohrschutz-Leiterbahnstruktur 26 aufzuweisen, da hier nur verschlüsselte Daten übertragen werden.

Wenn zu Manipulationszwecken die Vergussmasse 29 z.B. durch Schleifen oder Bohren entfernt wird, um an der Datenverschlüsselungseinheit 18 oder an den Anschlusspins 27 die unverschlüsselten Daten abzugreifen, wird dabei auch die Bohrschutz-Leiterbahnstruktur 26 der Flexleitung 21 zerstört und dadurch ein die Bohrschutz-Leiterbahnstruktur 26 einschließender Stromkreis unterbrochen. Dies wird von einer Überwachungseinheit (nicht gezeigt) des Kartenlesers 1 erkannt, die dann keinen Lesevorgang mehr zulässt bzw. den Magnetkopf 7 außer Funktion setzt. Eine unbemerkte Manipulation am Kartenleser 1 ist somit nicht möglich, wodurch ein "sicherer Kartenleser (secure card reader)" bereitgestellt ist.

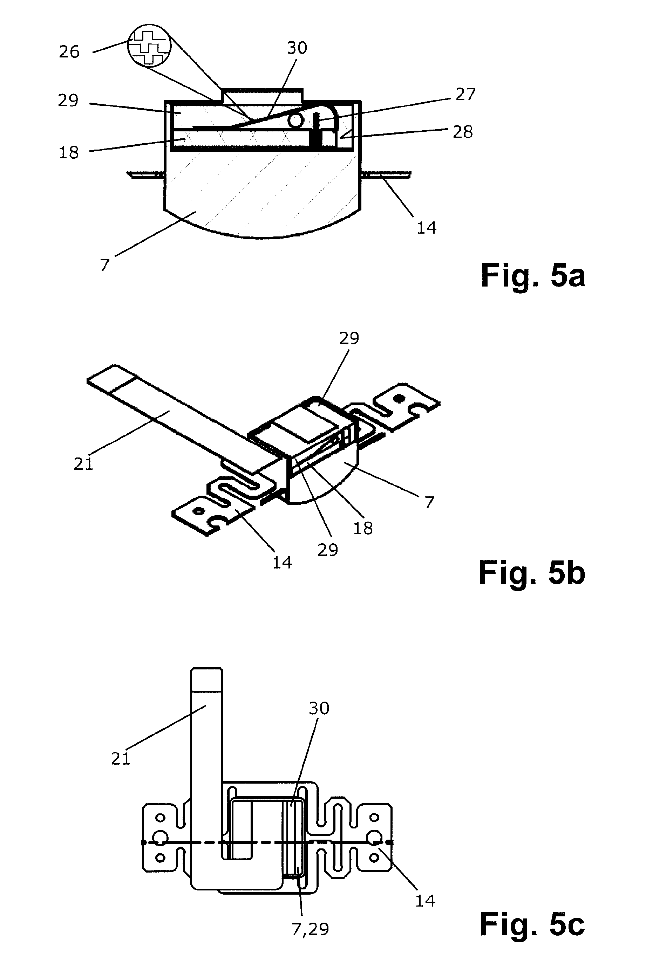

Vom Magnetkopf 7 der Fig. 4 unterscheidet sich der in **Fign. 5a bis 5c** gezeigte Magnetkopf 7 dadurch, dass die Datenverschlüsselungseinheit 18 ein Durchsteckmontage-Bauteil ist, das mit den Anschlusspins 27 des Magnetkopfes 7 verlötet ist. Die Datenverschlüsselungseinheit 18 weist einen kurzen Bohrschutz-Flexleitungsabschnitt **30** mit Bohrschutz-Leiterbahnstruktur 26 auf, mit dem die Anschlusspins 27 des Magnetkopfes 7 abgedeckt sind. Das mit der Datenverschlüsselungseinheit 18 verbundene Ende der Flexleitung 21 ist aus der Aussparung 28 des Magnetkopfes 7 herausgeführt und weist ein - hier lediglich beispielhaft U-förmiges-anderes Leitungsende auf, das in den Flexleitungsstecker 22 der Leiterplatte 20 eingesteckt wird. Das freie Ende des Bohrschutz-Flexleitungsabschnittes 30 kann dabei oben auf der Datenverschlüsselungseinheit 18 aufliegen. Die Aussparung 28 ist mit der Vergussmasse 29 gefüllt, so dass die Anschlusspins 27, die Datenverschlüsselungseinheit 18, ein Teil der Flexleitung 21 und der Bohrschutz-Flexleitungsabschnitt 30 miteinander mittels der Vergussmasse 29 vergossen sind. Die Flexleitung 21 braucht keine Bohrschutz-Leiterbahnstruktur 26 aufzuweisen, da hier nur verschlüsselte Daten übertragen werden.

Statt als biegsamer Bohrschutz-Flexleitungsabschnitt kann alternativ auch ein starrer (z.B. dachförmiger) Bohrschutz-Leiterplattenabschnitt vorgesehen sein, der die Anschlusspins 27 und die Datenverschlüsselungseinheit 18 abdeckt.

Wenn zu Manipulationszwecken die Vergussmasse 29 z.B. durch Schleifen oder Bohren entfernt wird, um an der Datenverschlüsselungseinheit 18 oder an den Anschlusspins 27 die unverschlüsselten Daten abzugreifen, wird dabei auch der Bohrschutz-Flexleitungsabschnitt 30 zerstört und dadurch ein die Bohrschutz-Leiterbahnstruktur 26 einschließender Stromkreis unterbrochen. Dies wird von einer Überwachungseinheit (nicht gezeigt) des Kartenlesers 1 erkannt, die dann keinen Lesevorgang mehr zulässt bzw. den Magnetkopf 7 außer Funktion setzt. Eine unbemerkte Manipulation am Kartenleser 1 ist somit nicht möglich, wodurch ein "sicherer Kartenleser (secure card reader)" bereitgestellt ist.

## Patentansprüche

1. Kartenleser (1) zum Datenaustausch mit einer Magnetstreifenkarte (2),
mit einem Magnetkopf (7) zum Datenaustausch mit dem Magnetstreifen (3) der in das Kartenlesergehäuse (5) eingeführten Magnetstreifenkarte (2), **gekennzeichnet durch**:
- einen Antrieb (8) zum Verfahren des Magnetkopfes (7) entlang des Magnetstreifens (3) der in einer ortsfesten Datenaustauschposition befindlichen Magnetstreifenkarte (2),
- eine am Magnetkopf (7) angeordnete Datenverschlüsselungseinheit (18) zum Verschlüsseln der beim Verfahren des Magnetkopfes (7) von dem Magnetkopf (7) gelesenen Daten des Magnetstreifens (3),
- einen mit der Datenverschlüsselungseinheit (18) elektrisch verbundenen und mit dem Magnetkopf (7) mitbewegten Sender (19) zum Senden der verschlüsselten Daten, sowie
- einen ortfesten Empfänger (23) zum Empfangen der gesendeten verschlüsselten Daten.

2. Kartenleser nach Anspruch 1, **dadurch gekennzeichnet, dass** die Datenverschlüsselungseinheit (18) an der die Anschlusskontakte (27) des Magnetkopfes (7) aufweisenden Anschlussseite des Magnetkopfes (7) befestigt ist.

3. Kartenleser nach Anspruch 1 oder 2, **dadurch gekennzeichnet, dass** die Datenverschlüsselungseinheit (18) und der Sender (19) über eine biegsame Leiterplatte (21) miteinander elektrisch verbunden sind.

4. Kartenleser nach Anspruch nach einem der vorhergehenden Ansprüche, **dadurch gekennzeichnet, dass** die Anschlusskontakte (27) des Magnetkopfes (7) und die Datenverschlüsselungseinheit (18) miteinander mittels einer Vergussmasse (29) vergossen sind.

5. Kartenleser nach einem der vorhergehenden Ansprüche, **dadurch gekennzeichnet, dass** die Anschlusskontakte (27) des Magnetkopfes (7) und die Datenverschlüsselungseinheit (18) durch eine insbesondere biegsame Bohrschutz-Leiterplatte (21; 30) abgedeckt sind.

6. Kartenleser nach Anspruch 5, **dadurch gekennzeichnet, dass** die Anschlusskontakte (27) des Magnetkopfes (7), die Datenverschlüsselungseinheit (18) und die Bohrschutz-Leiterplatte (21; 30) miteinander mittels einer Vergussmasse (29) vergossen sind.

7. Kartenleser nach einem der vorhergehenden Ansprüche, **dadurch gekennzeichnet, dass** die Datenverschlüsselungseinheit (18) ein SMD-Bauteil ist, das direkt auf eine der beiden Flachseiten einer biegsamen Bohrschutz-Leiterplatte (21) aufgelötet ist, welche einenends mit den Anschlusskontakten (27) des Magnetkopfes (7) und andernends mit dem Sender (19) elektrisch verbunden ist, dass die Anschlusskontakte (27) mit der Bohrschutz-Leiterplatte (21) abgedeckt sind, dass die Datenverschlüsselungseinheit (18) auf der den Anschlusskontakten (27) zugewandten Flachseite der Bohrschutz-Leiterplatte (21) angeordnet ist, und dass die Anschlusskontakte (27), die Datenverschlüsselungseinheit (18) und die Bohrschutz-Leiterplatte (21) miteinander mittels der Vergussmasse (29) vergossen sind.

8. Kartenleser nach Anspruch 7, **dadurch gekennzeichnet, dass** die Bohrschutz-Leiterplatte (21) zwischen ihrem einen Endabschnitt (21a), der mit den Anschlusskontakten (27) des Magnetkopfes (7) elektrisch verbunden ist, und ihrem Mittelabschnitt (21 c), der die Datenverschlüsselungseinheit (18) trägt, einen U-förmigen Abschnitt (21 b) aufweist.

9. Kartenleser nach einem der Ansprüche 1 bis 6, **dadurch gekennzeichnet, dass** die Datenverschlüsselungseinheit (18) ein Durchsteckmontage-Bauteil ist, das mit den Anschlusskontakten (27) des Magnetkopfes (7) verlötet ist, und einen herausgeführten, insbesondere biegsamen Bohrschutz-Leiterplattenabschnitt (30) aufweist, mit dem die Anschlusskontakte (27) abgedeckt sind, und dass die Anschlusskontakte (27), die Datenverschlüsselungseinheit (18) und der Bohrschutz-Leiterplattenabschnitt (30) miteinander mittels der Vergussmasse (29) vergossen sind.

10. Kartenleser nach Anspruch 9, **dadurch gekennzeichnet, dass** Bohrschutz-Leiterplattenabschnitt (30) mit seinem freien Ende auf der Datenverschlüsselungseinheit (18) aufliegt.
